# EUROPEAN PATENT APPLICATION

(11) **EP 4 582 691 A1**
(43) Date of publication of application: **09.07.2025**
(21) Application number: 24382006.5
(22) Date of filing: 04.01.2024
(51) Int. Cl.: F03D 13/10

(54) **DAMPING WIND TURBINE BLADE OSCILLATIONS**

(71) Applicant: Siemens Gamesa Renewable Energy Innovation & Technology S.L., 48170 Zamudio, Vizcaya (ES)
(72) Inventor: Nagy, Gideon, Madrid (ES)
(74) Representative: SGRE-Association

(57) **Abstract**

It is described a vibration damping device (110) for damping, in particular edgewise, vibrations of a wind turbine blade (101) during idling, stand-still, transport or servicing comprising: a removable spoiler (120) removably connectable to the rotor blade (101), in particular rotor blade surface (104), providing aerodynamic resistance, in particular adding drag, in a direction (102) substantially parallel to the average chordwise direction (103) of the rotor blade.

## Description

### Field of invention

The present invention relates to a vibration damping device for damping vibration of a wind turbine blade during idling, stand-still, transport or servicing. Furthermore, the present invention relates to a rotor blade comprising the vibration damping device and further relates to a wind turbine comprising the rotor blade.

### Art Background

Especially, during stand-still or a parked position, oscillations of a wind turbine rotor blade may occur.

US2012301293 (A1) discloses a method of operating a wind turbine to guard against oscillations of the wind turbine blades when they are at a standstill or idling at low speeds, and to a wind turbine blade anti-oscillation apparatus. The apparatus comprises a releasably attachable blade cover that provides a non-aerodynamic surface for a region of the blade. This has been found to prevent air flow adhering to the blade and periodically detaching in a phenomenon known as vortex shedding, and therefore prevents oscillations of the blade becoming problematic. The blade cover can comprise a sleeve of a net-like material, that can be positioned on the blade either before installation or in the field by service engineers using guide lines.

US2021079896 (A1) discloses an apparatus for mitigating vortex-shedding vibrations or stall-induced vibrations on one or more rotor blades of a wind turbine during standstill includes at least one positioning element located between a blade tip section and a blade root section thereof. The positioning element is adapted for wrapping around at least a portion of the rotor blade. The apparatus also includes at least one airflow modifying element coupled to the positioning element and defining a height relative to a surface of the rotor blade. Additionally, the apparatus includes at least one securing element operably coupled to the positioning element for temporarily securing the airflow modifying element to the rotor blade.

It has however been observed that edgewise oscillations or in general oscillations of a wind turbine blade may be problematic in one or more circumstances and are conventionally not in all situations or circumstances effectively mitigated.

Thus, there may be a need for a device for damping vibrations of a wind turbine blade, wherein wind turbine blade oscillations in particular during stand-still or an idling situation, are effectively and reliably damped by means of a simple device that allows for easy handling. There may further be a need for a respective wind turbine blade having equipment, in particular the damping device, such that vibrations, in particular edgewise-vibrations of the blade, are effectively and reliably damped, in particular during stand-still or very slow movement or very slow rotation (idling). There may further be a need for a wind turbine having at least one blade for which edgewise vibrations can effectively be damped.

### Summary of the Invention

This need may be met by the subject matter according to the independent claims. Advantageous embodiments of the present invention are described by the dependent claims.

According to an embodiment of the present invention, a vibration damping device is provided to mitigate edgewise vibrations, to be used on wind turbine blades during idling, stand-still, transport or servicing, comprising a removable spoiler connectable to the rotor blade, in particular rotor blade surface, providing aerodynamic resistance, in particular adding drag, in the edgewise direction, a direction substantially parallel to the (local) chord (line or plane) of the blade.

The vibration damping device may be configured to be reversibly connected or mounted on or at the wind turbine blade such that the vibration damping device can be mounted as required or demanded or can be demounted as required or demanded. The vibration damping device may not be needed to be mounted or installed at the blade during power production, i.e. throughout operation, when the rotor of the wind turbine rotates with the wind speed conforming angular velocity. The vibration damping device may for example (reversibly) be installed or mounted at the wind turbine blade in a situation where the rotor does not (or only slowly) rotate, such that the wind turbine rotor substantially stands still. The vibration damping device may, for example, be installed during service, transport, and the turbine's commissioning phase, with the rotor either parked or idling.

After the vibration damping device has been installed, the wind turbine blade may slightly move but may not rotate as during normal operation where electric energy is being produced. While the vibration damping device is mounted or installed on the wind turbine blade, the rotor of the wind turbine may either be parked with a brake or be in idling-mode, rotating slowly.

The spoiler may comprise or provide a shape or configuration such as to effect air resistance or adding drag to effectively damp the oscillations, in particular edgewise-oscillations of the wind turbine blade. The removable spoiler is not permanently installed at the blade but can be removed or installed on demand, as is required.

A chord line (at a particular spanwise (or longitudinal) position) may be considered to be a line that connects the leading edge and the trailing edge of a 2D aerofoil, or 2D cut perpendicular to the spanwise direction.

The average chord line (or direction) may be an average (direction) of plural chord lines (or directions) at plural spanwise (or longitudinal) positions, in particular across a longitudinal extent of the entire blade.

The vibration damping device, in particular the removable spoiler may effectively damp edgewise-oscillations, i.e. understood as oscillations which substantially involve vibrations or movements of the rotor blade in the average chordwise direction of the rotor blade.

Embodiments of the present invention may change the aerodynamic behaviour of the outboard sections of the rotor blade by having the removable spoiler mounted or connected to the rotor blade. The vibration damping device may reduce the susceptibility to vibrations, namely by adding drag and/or also by slightly re-directing the forces from the edgewise to the flap-wise direction. Thereby, the removable spoiler may comprise a surface exposed to the impacting wind such as to re-direct impacting wind in a direction transverse, in particular substantially perpendicular to the local chord direction of the blade. The vibration damping device or in particular the removable spoiler may not break the span-wise coherence of the vortices being shed at spanwise locations without the device. The vibration damping device and in particular the removable spoiler may brake and/or re-direct the edgewise movements of the wind turbine blade.

According to an embodiment of the present invention, the removable spoiler when connected to the blade is sticking out and/or protruding out from the blade surface, in particular from a suction side surface and/or a pressure side surface, in a direction substantially perpendicular to the local chord line (or direction) of the blade.

When the removable spoiler sticks out or is protruding out of the blade surface, effective air resistance may be provided. When the removable spoiler provides components for sticking out from the suction-side surface and/or from the pressure-side surface, the air resistance may be increased, thereby more effectively damping or mitigating edgewise-oscillations or vibrations.

According to an embodiment of the present invention, the removable spoiler comprises a connection system configured to be in contact with the blade, in particular blade surface, and for mounting the vibration damping device on the blade, and one or more aerodynamic resistance members coupled to the connection system. The resistance members of the device will provide the necessary aerodynamic drag in the edgewise direction. The connection system is in particular configured to be in contact with or coupled to portions of a suction side surface and/or a pressure side surface of the blade, allowing the resistance members to be attached to the blade.

The connection system may be differently configured according to different embodiments. The connection system may either entirely be reversibly or removably connectable to the blade or may also comprise portions which are permanently installed at the wind turbine, in particular the wind turbine blade surface.

The connection system may in particular be configured not requiring any bolts to be in contact or to be mounted at the wind turbine blade surface. The connection system may be in contact with parts of the outer blade surface including the suction-side surface and the pressure-side surface as well as the trailing edge and the leading edge at the respective installation location of the connection system.

The connection system or the device may be configured with a bolted, a glued, a click-in or any possible connection between the different members of the device.

The one or more aerodynamic resistance members (for example providing air-resistant surfaces or structures) may be permanently coupled to the connection system, for example using adhesive and/or bolts or the like.

According to an embodiment of the present invention, the resistance member(s) are arranged, when the device is mounted at the blade, in a direction substantially parallel to the blade's spanwise direction and/or wherein a first air resistance member protrudes out of the blade's surface away from the pressure side surface, and/or wherein a second air resistance member protrudes out of the blade's surface away from the suction side surface.

When the resistance members are being arranged (with their respective main surface or main plane) in a direction parallel to the spanwise direction the damping may be improved. When one or more of the resistance members protrudes away from the pressure-side and/or suction-side, any movement of the rotor blade in a plane approximately parallel to the chord line may effectively be impaired due to the air resistance of the resistance members.

According to an embodiment of the present invention, at least one air resistance member comprises any spanwise elongated shape extending in a longitudinal direction (to be oriented approximately along/parallel to the blade's spanwise direction and extending in a width direction substantially perpendicular to the blade's local chord protruding from the blade's surface.

The protruding resistance member may be configured to effectively provide high air resistance in the direction of the blade's vibrational edgewise motion.

According to an embodiment of the present invention, at least one aerodynamic resistance member comprises at least one of: a substantially rectangular shape; a U-shape; a shape of a half pipe, in particular having circular cross-section; an L-shaped extrusion; a concave surface; any other shape that is stiff enough and/or has a surface that functions as an aerodynamic brake.

Thereby great flexibility in the design and structural details of the air resistance members is foreseen. The respective design or shape may be selected depending on the particular application, in particular depending on the geometry and/or dimensions of the rotor blades.

According to an embodiment of the present invention, the connection system comprises an engaging portion, in particular slit like portion, in particular V-shaped portion, to receive at least a portion of the trailing edge and/or portion of the suction side surface and/or the pressure side surface of the blade, the engaging portion being in particular substantially mirror symmetrical.

The connection system comprising an engaging portion may be integrally formed (e.g. made of foam or plastic, like purfoam, styrofoam, pur coated foam or any other light weighted foam), in particular as one piece, with one or more resistance members.

Thereby an effective embodiment of a connection system may be provided.

According to an embodiment of the present invention, this particular connection system comprises a strip or strap or band or belt or robe for leading around (and/or being in contact with) the blade outer surface (perpendicular to longitudinal direction) and guiding through two through openings of the engaging portion in order to (reversibly) lash/tie the connection engaging portion to the blade.

The strip or strap or band or belt or robe may be wound around the blade outer surface (in particular including a suction-side surface, a pressure-side surface and a leading edge and a trailing edge portion) and may be tightened, thereby mounting or fixing the engaging portion of the connection system to the blade (outer surface). Thereby, the strip may be put under tension such that the entire removable spoiler may be fixed to the rotor blade outer surface by force closure and/or frictional connection at least partly.

When the device is mounted at the trailing edge a clearance between the device and the trailing edge may be provided to avoid contact with the blade's optional dinotails, that may be mounted at the trailing edge.

According to an embodiment of the present invention, the connection system comprises: at least one, in particular two, mounting member(s) to which at least one aerodynamic resistance member is connected; a hook-and-loop fastener (or touch fastener) comprising a first part being one of the hook-part or a loop-part and a second part being one of the loop-part or a hook-part, the second part being removably engageable with first part, wherein the first part is to be attached to the blade, in particular blade surface; wherein the second part is coupled, in particular glued and/or bolted or by any other means (including touch fasteners), to the mounting member or bracket, wherein for mounting the mounting member to the blade the first part is engaged with the second part.

Thereby an alternative or additional embodiment/configuration of the connection system may be provided. The mounting bracket may also be referred to as mounting member or mounting frame. The mounting member not necessarily needs to have a shape as a bracket. The hook-and-loop fastener may provide an effective manner for reversibly mounting the removable spoiler at the wind turbine blade.

According to an embodiment of the present invention, the mounting member having substantially a shape of a triangle in cross-section, a first edge being complementary to a shape of a blade surface, a second edge having the resistance member attached.

The first edge of the mounting bracket or mounting member may comprise (or have attached thereto) the second part of the hook-and-loop fastener. The blade surface comprises the first part of the hook-and-loop fastener. Thus, the mounting bracket or mounting member together with the resistance member may be reversibly connected to the rotor blade by engaging the first part (of the hook-and-loop fastener) with the second part (of the hook-and-loop fastener). The resistance member may for example be attached to the second edge of the mounting member or mounting bracket by using an adhesive and/or one or more bolts or by any other solid mechanical connection. Thus, the mounting member or mounting bracket may irreversibly and permanently be connected to the resistance member.

Embodiments of the present invention may provide mounting the device from/at the leading edge or from/at the trailing edge.

According to an embodiment of the present invention, it is provided a rotor blade system, comprising: a rotor blade; vibration damping device according to one of the preceding embodiments, mounted at the rotor blade.

The vibration damping device may be installed at a tip end portion of the rotor blade, wherein for example a distance between the removable spoiler to the tip end of the rotor blade may for example amount to within 0.0% or 0.5% and 30% of a longitudinal extent of the rotor blade. Other values may be possible. The removable spoiler may have a longitudinal extent for example being between 0.5% and 20% of the longitudinal extent or length of the rotor blade. Other values are possible.

According to an embodiment of the present invention, it is provided a wind turbine, comprising a rotor at which one or more blades are mounted, at least one blade being configured according to the preceding embodiment.

According to an embodiment of the present invention, all rotor blades may be configured to have a respective vibration damping device mounted.

It should be understood that features, individually or in any combination, explained, described, provided or applied for a vibration damping device and/or for a rotor blade and/or for a wind turbine, may also, individually or in any combination, be applied to or provided for a method of damping vibrations according to embodiments of the present invention and vice versa.

According to an embodiment of the present invention, it is provided a method of damping vibrations, in particular edgewise-vibrations, of a wind turbine blade during idling or stand-still, comprising: removably connecting a removable spoiler to the rotor blade, in particular rotor blade surface, thereby providing aerodynamic resistance, in particular adding drag, in a direction substantially parallel to the average local chord line of the blade.

The method may in particular be performed by using a vibration damping device according to one of the aforementioned or explained or described embodiments. The vibration damping device may thereby temporarily be installed or connected to the rotor blade. When the wind turbine is intended to start normal operation, the removable spoiler may be removed or deinstalled from the rotor blade, for example by maintenance personnel.

Embodiments of the present invention are now described with reference to the accompanying drawings. The invention is not restricted to the illustrated or described embodiments.

### Brief Description of the Drawings

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.
Fig. 1 schematically illustrates a portion of a wind turbine blade system according to an embodiment of the present invention;
Fig. 2 schematically illustrates a wind turbine blade system according to an embodiment of the present invention;
Fig. 3 schematically illustrates a portion of a wind turbine blade system according to an embodiment of the present invention;
Fig. 4 schematically illustrates a wind turbine blade system according to an embodiment of the present invention;
Fig. 5 schematically illustrates a wind turbine blade system according to an embodiment of the present invention in an exploded view;
Figs. 6 and 7 schematically illustrate a wind turbine blade system according to an embodiment of the present invention;
Fig. 8 schematically illustrates a wind turbine blade system according to an embodiment of the present invention; and
Fig. 9 schematically illustrates a wind turbine according to an embodiment of the present invention.

### Detailed Description

Features or elements in the Figures similar in structure and/or function are labelled with reference signs differing only in the first digit. A description of an element not addressed in detail with respect to an embodiment of figure may be taken from the corresponding element of another embodiment.

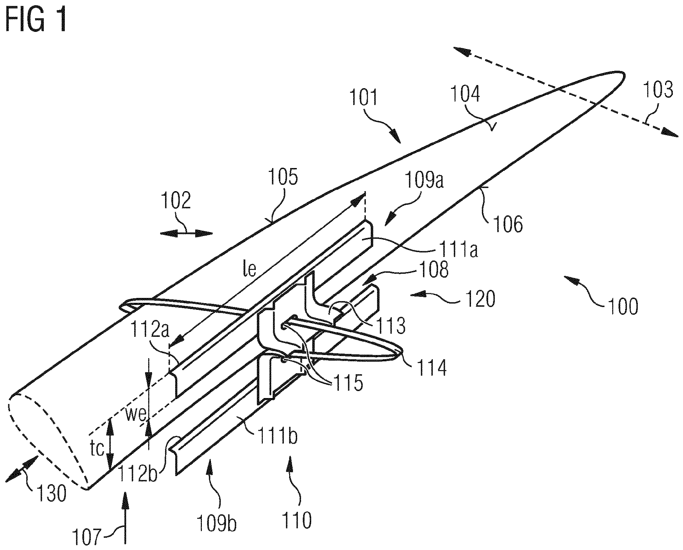

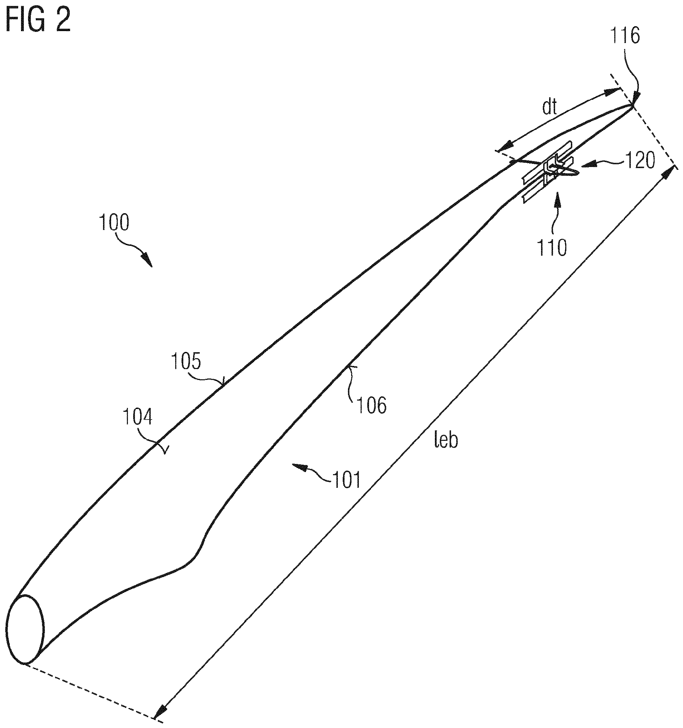

The portion of the wind turbine blade system 100 according to an embodiment of the present invention illustrated in **Fig. 1** comprises a rotor blade 101 as well as a vibration damping device 110 according to an embodiment of the present invention, which is attached to the rotor blade 101. In **Fig. 2****,** the rotor blade system 100 is illustrated entirely in its full extent. The vibration damping device 110 illustrated in Fig. 1 is in particular for damping vibrations of the wind turbine blade 101 during idling, stand-still, transport or servicing.

The vibration damping device 110 comprises a removable spoiler 120 which is removably connectable to the rotor blade 101 and provides aerodynamic resistance in a direction 102 substantially parallel to the average local chord line 103 of the blade 101. The wind turbine blade 101 comprises a suction-side surface 104 and a pressure-side surface on the backside of the suction-side surface 104 (the pressure side being not visible in Fig. 1). The wind turbine blade further comprises a leading edge 105 and a trailing edge 106. The removable spoiler 120 is in Fig. 1 illustrated when connected to the wind turbine blade 101.

As can be seen in Fig. 1, the removable spoiler 120 comprises portions 109a, 109b which stick out by a height h from the suction blade surface 104 (and also from the pressure blade surface) in a direction 107 substantially perpendicular to the average local chord line 103 of the blade 101.

The removable spoiler comprises a connection system 108 which is configured to be in contact with the blade 101 (in particular with the suction-side surface 104 and/or the pressure-side surface), wherein the connection system 108 is configured for mounting the vibration damping device 110 or the spoiler 120 at the wind turbine blade 101.

In the embodiment illustrated in Fig. 1 the removable spoiler 120 comprises two aerodynamic resistance members 109a, 109b which are coupled to the connection system 108 and which provide an aerodynamic resistance in a direction 102 perpendicular to a resistance member's main extension plane which is oriented substantially perpendicular to the local average chord line 103 of the rotor blade 101.

As can be appreciated from Fig. 1, when the rotor blade 100 is viewed along a view substantially perpendicular to the local chord 103, the resistance members 109a, 109b stretch out parallel to the blade's spanwise direction 130.

In other embodiments, contrary to what has been depicted in Fig. 1, the device may be mountable/mounted at a leading edge.

As can be appreciated from Fig. 1, the air resistance members 109a, 109b comprise extruded (e.g. including shapes of a fixed cross-sectional profile by pushing material through a die or template or moulding of the desired cross-section) shapes 111a, 111b which have a longitudinal extent le in a longitudinal direction and having a width extent we in a width direction which is oriented substantially perpendicular to a the local chord direction 103. As can be appreciated from Fig. 1.

In other embodiments, the removable spoiler 120 may only comprise one air resistance member sticking out from either, the suction-side surface or the pressure-side surface.

The shapes or designs of the air resistance members 109a, 109b may differ in different embodiments and have been described above.

In the embodiment illustrated in Fig. 1, the connection system 108 comprises an engaging portion 113 which is in particular a slit-like portion or V-shaped portion, to receive at least a portion of the suction-side surface 104 and/or the not illustrated pressure-side surface of the blade. However, the engaging or V-shaped portion 113 (in particular apex) may remain at a distance from the trailing edge in such a way that the clearance from this border will prevent damage to eventual trailing edge add-ons, like e.g. dinotails.

The connection system of the embodiment illustrated in Fig. 1 further comprises a strip or band 114 (illustrated in Fig. 1 in a loose state which may be tightened for fixing) for leading around the blade outer surface and guiding through two openings 115 provided in the engaging portion 113 in order to tie the connection engaging portion 113 to the rotor blade. The air resistance members 109a, 109b are (permanently or irreversibly) connected to the engaging portion 113.

As can be appreciated from Fig. 2, illustrating the entire rotor blade system 100 (from which a portion is illustrated in Fig. 1) the rotor blade 101 has a longitudinal extent leb and the damping device 110 is a distance dt installed away or apart from the blade tip 116.

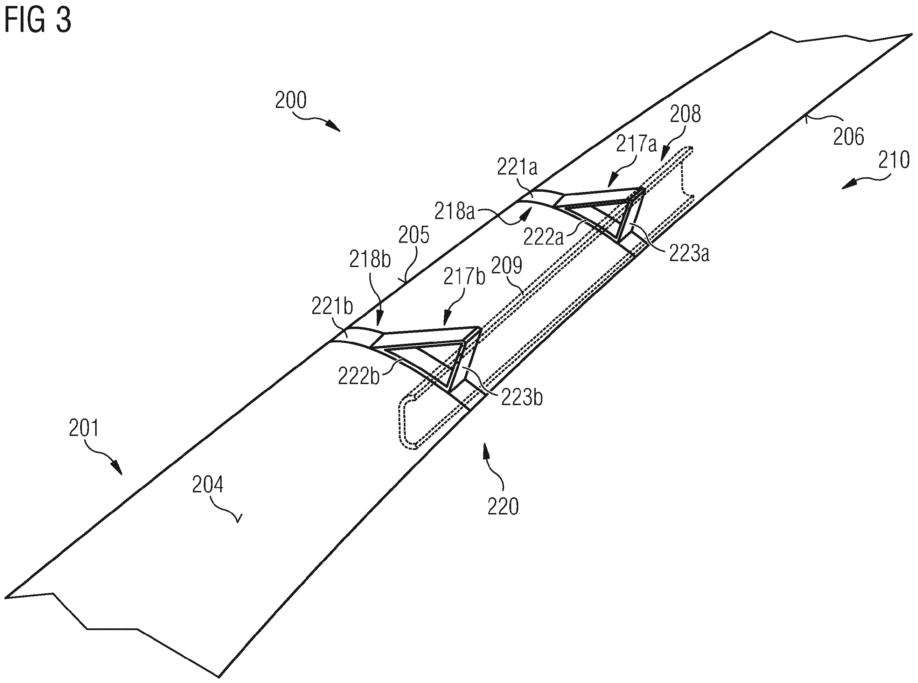

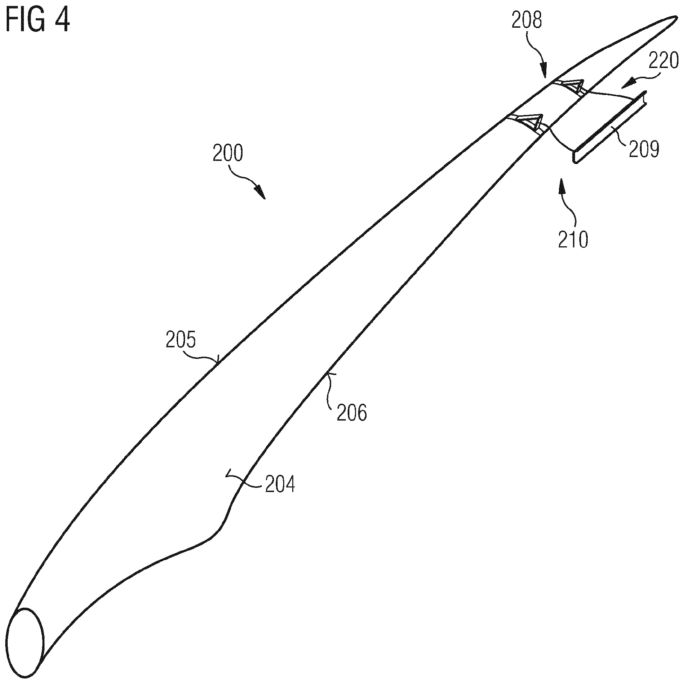

The **Figs. 3** **and** **4** schematically illustrate a portion and an entire blade system according to another embodiment of the present invention. The rotor blade system 200 illustrated in Figs. 3 and 4 comprises a wind turbine blade 201 as well as a vibration damping device 210 comprising a removable spoiler 220. In Figs. 3 and 4, the removable spoiler 220 is partially illustrated in a transparent manner, in order to more clearly demonstrate the constituting components.

The connection system 208 comprises at least two mounting brackets 217a, 217b to which an aerodynamic resistance member 209 is attached. The connection system 208 further comprises a hook-and-loop fastener 218a and 218b for each of the mounting brackets 217a, 217b. A first part 221a, 221b of the hook-and-loop fastener 218a, 218b is attached to the rotor blade. A second part (not visible in Figs. 3 and 4) is coupled to an edge 222a, 222b of the respective mounting bracket 217a, 217b facing the blade surface. Thereby for mounting the mounting brackets 217a, 217b to the blade 201 the first part 221a and 221b is engaged with the matching second parts 222a and 222b.

The first edge 222a, 222b of the respective mounting brackets 217a, 217b is substantially complementary to a shape of the suction-side and/or pressure side surface 204 of the rotor blade. A respective second edge 223a, 223b has the respective aerodynamic resistance member 209 attached or mounted.

In other embodiments further mounting brackets may be connected to for example a pressure-side of the blade and the respective mounting brackets may hold one or more further aerodynamic resistance members.

The Fig. 4 illustrates the entire rotor blade system 200 illustrating the respective installation location of the respective vibration damping device 210.

The mounting system illustrated in Figs. 3 and 4, may comprise a VELCRO strip on the blade surface and on one edge or side of the respective mounting brackets. The respective aerodynamic break or spoilers 209 may be bolted and/or glued to the respective mounting brackets or can be fixed by means of any other mechanical connection.

There may be one or more mounting members, not necessarily two like in the Figs. 3 or 4.

The spoiler element, in this case the U-shaped extrusion, can be placed on the suction-side, the pressure-side or both.

The spoiler element is not necessarily U-shaped, it may be half a pipe (circular), an L-shaped extrusion or any other shape that is stiff enough and has a surface that will work as an aerodynamic brake.

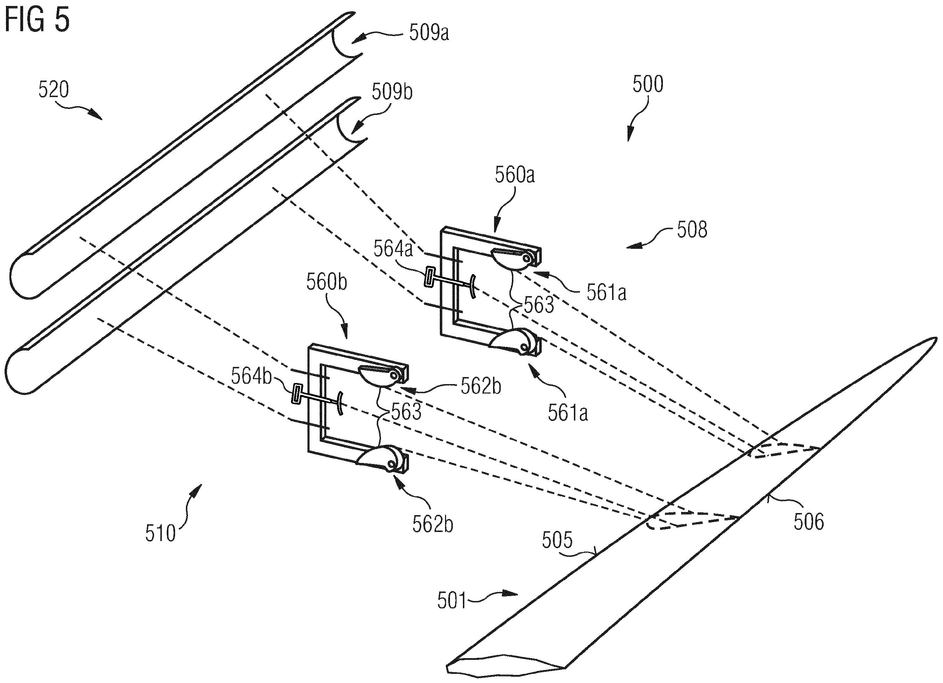

The rotor blade system 500 schematically illustrated in **Fig. 5** comprises a wind turbine blade 501 as well as a vibration damping device 510 according to an embodiment of the present invention in an exploded view. The device 510 comprises a connection system 508 and one or more aerodynamic resistance members 509a, 509b which are connected to the connection system 508.

In the embodiment illustrated in Fig. 5, the connection system 508 comprises at least one or in particular two mounting brackets 560a, 560b to which at least one aerodynamic resistance member 509a, 509b is connected. In the embodiment illustrated in Fig. 5, the mounting brackets substantially have a U-shape and are being configured to partly engage or surround a portion of a leading edge 505 of the rotor blade 501.

Each of the mounting brackets 560a, 560b comprises in the illustrated embodiment two clamping members 561a and 562b, respectively. The clamping members include a circular spring 563 underneath, which will assure contact with a portion of a suction side or a pressure side of the rotor blade 501 and will hold the device 510 connected to the rotor blade 501. Due to the spring force, the respective contact members 563 tend to turn inwards for applying a clamping force when tightening member 564a and 564b to a portion of the rotor blade 101. In particular, the clamping members may prohibit that the device 510 slits outwards from the leading edge 505 and in particular thereby holds the device 510 securely connected to the rotor blade 501.

In other embodiments, the respective device 510 may be mountable or connectable to the rotor blade at a trailing edge 506 of the rotor blade.

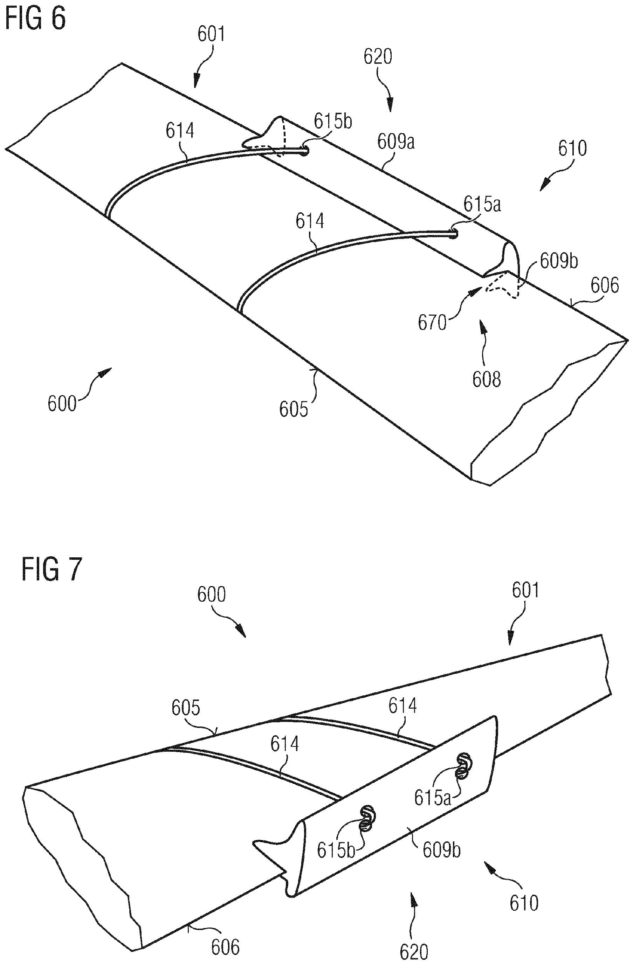

**Figs. 6 and 7** schematically illustrate a rotor blade system 600 according to still another embodiment of the present invention in a schematic manner. The device 610 comprises a connection system 608 which is configured to be in contact with the rotor blade 601 and which is configured to mount the device 610 on the rotor blade 601. The device 610 further comprises an aerodynamic resistance members 609a, 609b (in this embodiment integrally formed) which protrude from the surface of the blade 601.

The connection system 608 comprises an engaging portion 670 which has in particular a V-shape, for example in order to receive at least a portion of the suction side surface and/or the pressure side surface of the blade and in particular to receive the portion of the trailing edge 606 or in other embodiments the leading edge 605 of the blade 601.

The V-shaped engaging portion is not a separate part in this embodiment. connection system 608 is integrally formed with the resistance members. It is one integral foam block with a sleeve in it that fits over the trailing edge or over the leading edge.

In the embodiment illustrated in Figs. 6 and 7, the engaging portion 670 is integrally formed with the one or more aerodynamic resistance members 609a, 609b. Thereby the integrally formed piece consisting of the resistance members 609a, 609b and the engagement portion may for example contain foam or be made or manufactured from foam or plastic, like purfoam, styrofoam, pur coated foam or any other light weighted foam.

Similar to the embodiment illustrated in Fig. 1, the device 610 comprises one or more strap(s) 614 which surrounds the outer circumference of the rotor blade 601 and is led through two slots 615a 615b which are provided in the integrally formed piece including the resistance members 609a and b as well as the engaging portion 670.

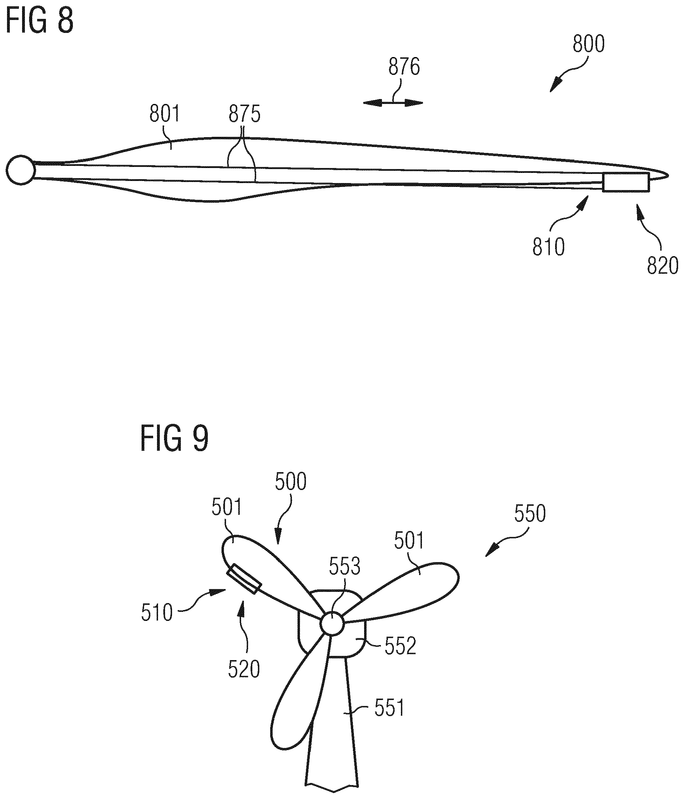

**Fig. 8** further illustrates in a schematic manner a wind turbine blade system 800 according to an embodiment of the present invention. The removable spoiler 820 is thereby connected with connection cables 875 which run in the span-wise direction 876 being substantially parallel to a longitudinal direction of the rotor blade 801.

It should be understood, that embodiments of the present invention may allow to mount a device for damping vibrations using cables or ropes or bands or straps running in the span-wise direction and/or running substantially perpendicular to this span-wise direction around a circumference of the rotor blade as illustrated in Figs. 1, 6 and 7.

In the embodiment illustrated in Figs. 6 and 7, the respective piece including the resistance members and the engagement portion may be fixed or connected to the rotor blade using one or more straps 614, for example only one strap, or two straps or even more straps 614.

Instead of chord-wise straps as illustrated in Figs. 1, 6 and 7, also the span-wise straps, or a combination of both, may be utilized or employed for mounting the damping mitigating device.

**Fig. 9** schematically illustrates a wind turbine 550 according to an embodiment of the present invention. The wind turbine comprises a wind turbine tower 551, a nacelle 552 mounted on top of the tower 551. The nacelle 552 harbours a not illustrated generator which is mechanically connected to a hub 553 at which one or more rotor blades 501 or rotor blade systems 500 are mounted. At least one of the rotor blades comprises a vibration damping device 510 removably mounted or installed at the rotor blade 501.

It should be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. Vibration damping device (110) for damping, in particular edgewise, vibrations of a wind turbine blade (101) during idling, stand-still, transport or servicing comprising:
a removable spoiler (120) removably connectable to the rotor blade (101), in particular rotor blade surface (104), providing aerodynamic resistance, in particular adding drag, in a direction (102) substantially parallel to an average local chord line (103) of the rotor blade.

2. Vibration damping device according to the preceding claim, wherein the removable spoiler (120) when connected to the blade (101) is sticking out and/or protruding out from the blade surface (104), in particular from a suction side surface and/or a pressure side surface, in a direction (107) substantially perpendicular to the local chord line (103) of the blade.

3. Vibration damping device according to any one of the preceding claims, the removable spoiler (120) comprising:
a connection system (108) configured to be in contact with the blade, in particular blade surface, and for mounting the vibration damping device (110) at the blade,
one or more aerodynamic resistance members (109a,b) coupled to the connection system (108) and providing aerodynamic resistance in a direction (102) perpendicular to a resistance members main extension plane to be oriented substantially perpendicular to the local average chord line (103) of the blade,
wherein the connection system is in particular configured to be in contact with or coupled to portions of a suction side surface and/or a pressure side surface of the blade.

4. Vibration damping device according to the preceding claim,
wherein the resistance member (109a,b) being arranged, when the device is mounted at the blade, in a direction parallel to the spanwise direction of the blade (130), and/or
wherein a first air resistance member (109b) protrudes perpendicular to the average local chord line away from the pressure side surface, and/or
wherein a second air resistance member (109a) protrudes perpendicular to the average local chord line away from the suction side surface (104).

5. Vibration damping device according to any one of the preceding claims 3 to 4, wherein at least one air resistance member (109a,b) comprises an extruded, or close to extruded shape extending in a longitudinal direction in a longitudinal extent (le) and extending in a width direction to a width extent (we).

6. Vibration damping device according to any one of the preceding claims 3 to 5,
wherein at least one aerodynamic resistance member (109a,b) comprises at least one
shape that is stiff enough and/or has a surface that functions as an aerodynamic brake.

7. Vibration damping device according to any one of the preceding claims 3 to 6, wherein the connection system (108) comprises an engaging portion (113), in particular slit like portion, in particular V-shaped portion, to receive at least a portion of the suction side surface (104) and/or the pressure side surface of the blade.

8. Vibration damping device according to the preceding claim, wherein the connection system (108) comprises a strap or band or strap or robe for leading around the blade outer surface and guiding through two through openings (115) of the engaging portion (113) in order to lash the engaging portion (113) to the blade.

9. Vibration damping device (600) according to any one of the preceding claims 7 or 8, wherein the engaging portion (670) is integrally formed with the one or more aerodynamic resistance members (609a,b), in particular containing foam or plastic.

10. Vibration damping device according to any one of the preceding claims 3 to 9,
wherein the connection system (208) comprises:
at least one, in particular two, mounting members (217a,b) to which at least one aerodynamic resistance member (209) is connected;
a hook-and-loop fastener (218a,b) or touch fastener comprising a first part (221a,b) being one of the hook-part or a loop-part and a second part being one of the loop-part or a hook-part, the second part being removably engageable with first part,
wherein the first part (221a,b) is be attached to the blade (101), in particular blade surface;
wherein the second part is coupled, in particular glued and/or bolted or fixed by any other mechanical connection, to the mounting member (217a,b),
wherein for mounting the mounting member to the blade the first part is engaged with the second part.

11. Vibration damping device according to the preceding claim, wherein the mounting member (217a,b) having a first edge (222a,b) being complementary to a shape of a blade surface and a second edge (223a,b) having the resistance member (209) attached.

12. Vibration damping device (500) according to any one of the preceding claims 3 to 11, wherein the connection system comprises:
at least one, in particular two, mounting brackets (560a,b) to which at least one aerodynamic resistance member (509a,b) is connected;
the at least one mounting bracket (560a,b), in particular having a U-shape, being configured to partly engage or surround a portion of a leading edge (505) or a trailing edge (506) of the blade (601) and having one or more clamping member (561a; 562b), being pushed to each other by circular springs, for clamping including press-fit and/or form-fit the mounting bracket to the blade (501).

13. Rotor blade system (100), comprising:
a rotor blade (101);
vibration damping device (110) according to one of the preceding claims, mounted at the rotor blade.

14. Wind turbine (550), comprising:
a hub (553) or rotor at which at least one or plural rotor blade system (500) are mounted, at least one blade system being configured according to the preceding claim.

15. Method of damping vibrations, in particular edgewise-vibrations, of a wind turbine blade (101) during idling, stand-still, transport or servicing comprising:
removably connecting a removable spoiler (120) to the rotor blade, in particular rotor blade surface, thereby providing aerodynamic resistance, in particular adding drag, in a direction (102) substantially parallel to the local average chordwise direction (103) of the blade (101).
